# EUROPEAN PATENT SPECIFICATION

(11) **EP 0 576 724 B1**
(45) Date of publication and mention of the grant of the patent: **01.04.1998**
(21) Application number: 92117591.5
(22) Date of filing: 15.10.1992
(51) Int. Cl.: A63B 55/08, B62K 5/04

(54) **Three-wheeled cart for the transport of one person and golf equipment**
Dreirädriger Wagen für den Transport einer Person und einer Golfausrüstung
Chariot à trois roues pour le transport d'une personne et d'un équipement de golf

(30) Priority: 03.07.1992 IT PD920124
(43) Date of publication of application: 05.01.1994
(73) Proprietor: TOTEM S.r.L., I-35139 Padova (IT)
(72) Inventor: Cassano, Nicola, I-35149 Padova (IT)
(74) Representative: Gustorf, Gerhard, Dipl.-Ing.

(56) References cited:
- BE-A- 651 947
- GB-A- 2 242 404
- US-A- 2 836 253
- US-A- 3 513 924
- US-A- 4 848 504

## Description

The present invention relates to a golf cart comprising a frame mounted on three wheels and carrying footboards, an electric motor for driving the cart and a central steering axle, the lower end of which is connected to the single front wheel whereas the upper end carries a handlebar provided with drive members for controlling the motor, whereby the handlebar may be moved to different positions.

Such a golf cart is known by GB-A 2 242 404. This golf cart is not provided with a seat, but is has only one double footboard allowing the user to drive the cart in a standing position. In a second position, the handle must be tilted from its first, rearward position to its forward position. It is not clear whether in said second position the single wheel becomes the rear wheel, i.e. the user pushes the cart (which is then difficult to steer), or whether the user draws the cart, which has the disadvantage that he does not see that cart and thus cannot control it precisely.

In US-A 3 513 924 a golf cart is illustrated, the steering axle of which is operatively connected to a pair of front wheels, whereas a third wheel is located on the rear end of the frame. At said rear end there is neither provided any means for transporting a person in its standing position nor is there any space to mount such a means. Furthermore, such a means in the vicinity of the single wheel would render the whole golf cart instable because the weight of a standing person would cause a tilting moment having the single wheel as its centre. On the other hand steering and controlling the golf cart by a walking person is rather difficult because such person must walk at a lateral side of the cart near one of the front wheels.

US-A 2 836 253 relates to a golf cart which can be used either in a seating position or in a walking position. In the walking position, however, steering and driving is actuated by a remote control.

It is an object of the invention to provide a motor driven golf cart which may be comfortably and easily used by a person in three different positions, namely in a seating, a standing and a walking position, without the drawbacks of the carts known in the art.

This object is achieved by the features of the characterising clause of the claim stating
- that the frame supports a seat for the transport of a person and a housing for containing golf equipment,
- that on either side of the seat a front footboard is located, whereas a rear footboard is located behind the seat,
- and that the steering axle is a flexible rod and/or a hinged rod and/or a telescopic rod such
   that the handlebar is moveable between a first position at which it is positioned rearwardly of said frame,
   thus the cart being capable to be steered by an operator seated on said seat, standing on said rear footboard or walking behind said cart.

These features of the invention have the advantages that the cart may be used in three different positions without changing the driving direction of the cart. In the two positions on the frame, the user has two different footboards, one in his sitting position and the other one in his upright position, whereas in the third position the user pushes the cart always steering it under visual control. In order to switch from one to another position, it is sufficient to move the rod only by a small angle without pivoting it from a rearward to a forward position.

The cart is made up of a chassis with three wheels, with room for both one person and a golf equipment.

An electric motor which is connected to the two parallel, rear wheels, moves the cart; the controls for the electric motor are placed on the grip of the handlebar, allowing for easy control of the cart's movements.
The chassis is constructed so as to support at least one seat and one or two lateral cases or other appropriate housing for the equipment.
The person driving or guiding the above-mentioned cart can choose among three different methods: he can sit on the seat, resting his feet on the special boards and gripping the handle; or he can stand up on the rear board; or he can walk behind the cart. The drive/guide members are suited for all three positions, allowing the person to walk when he wishes to or to drive while sitting on the cart, when he is tired of walking. The drive/guide members, like the ones for steering and movement, are located on a handlebar supported by a moveable rod which may be bent and/or hinged and/or telescopic, so that the grip can be located in the position which is most convenient for the driver.
In this way, one can combine the useful physical exercise of walking with rest, getting only so much exercise as is required.

The following is just one example among many of the practical applications of the invention in question, illustrated in the attached table.
The table shows a three-wheeled golf cart (R), with housing (E) for golf equipment, a handlebar (B) supported by a rod and a seat (C) with a back (H).
On either side of the seat (C) there are two boards (Ga), while another board (Gp) is located behind the seat (C).
The rod (K) is, in this case, telescopic and hinged in (P) so that the handlebar (B) is in the right position to guide the cart on foot while walking behind the cart (dotted lines), or to drive it while sitting in the cart.

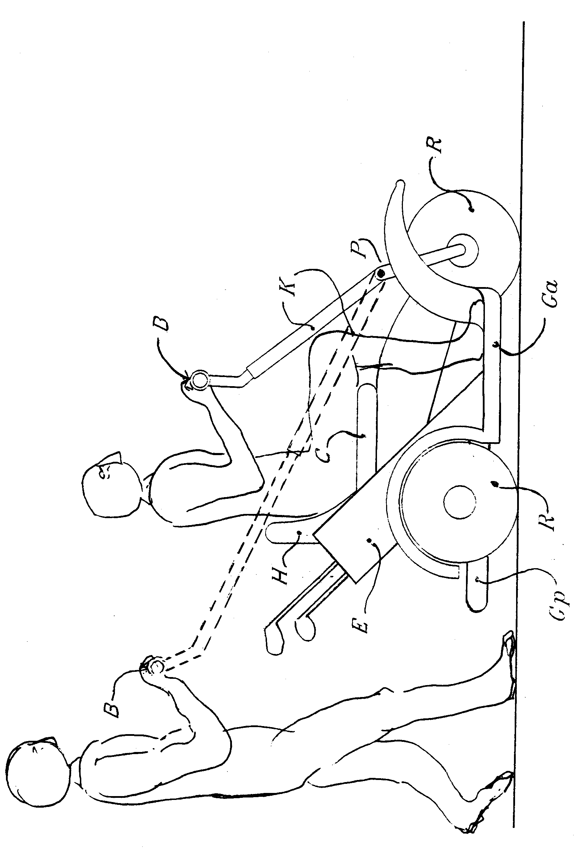

## Claims

1. Golf cart comprising a frame mounted on three wheels (R) and carrying footboards, an electric motor for driving the cart and a central steering axle (K), the lower end of which is connected to the single front wheel whereas the upper end carries a handlebar (B) provided with drive members for controlling the motor, whereby the handlebar (B) may be moved to different positions, characterised in that the frame supports a seat (C) for the transport of a person and a housing (E) for containing golf equipment, that on either side of the seat (C) a front footboard (Ga) is located, whereas a rear footboard (Gp) is located behind the seat (C), and that the steering axle (K) is a flexible rod and/or a hinged rod and/or a telescopic rod such that the handlebar (B) is moveable between a first position at which it is located above said frame and a second position at which it is positioned rearwardly of said frame, thus the cart being capable to be steered by an operator seated on said seat (C), standing on said rear footboard (Gp) or walking behind said cart.

## Patentansprüche

1. Golfwagen mit einem auf drei Rädern (R) gelagerten, Trittbretter tragenden Rahmen, einem Elektromotor für den Antrieb des Wagens und einer mittigen Lenkwelle (K), deren unteres Ende mit dem einzigen Vorderrad verbunden ist, während ihr oberes Ende eine Lenkstange (B) trägt, die Betätigungselemente zum Ansteuern des Motors aufweist und in unterschiedliche Stellungen gebracht werden kann, dadurch gekennzeichnet, daß der Rahmen einen Sitz (C) für den Transport einer Person sowie einen Behälter (E) zur Aufnahme von Golfausrüstung trägt, daß auf beiden Seiten des Sitzes (C) jeweils ein vorderes Trittbrett (Ga) angeordnet ist, während hinter dem Sitz (C) ein hinteres Trittbrett (Gp) angebracht ist, und daß die Lenkwelle (K) eine flexible Stange und/oder eine Gelenkstange und/oder eine Teleskopstange ist, so daß die Lenkstange (B) zwischen einer ersten Position, in der sie über dem Rahmen liegt, und einer zweiten Position beweglich ist, in der sie sich hinter dem Rahmen befindet, wodurch der Golfwagen von einem Benutzer steuerbar ist, der auf dem Sitz (C) sitzt, auf dem hinteren Trittbrett (Gp) steht oder hinter dem Wagen läuft.

## Revendications

1. Chariot de golf comprenant un châssis monté sur trois roues (R) et portant des marchepieds, un moteur électrique pour la commande du chariot et un arbre de direction central (K), dont l'extrémité inférieure est reliée à la seule roue avant, tandis que l'extrémité supérieure porte un guidon (B) muni des éléments de commande pour manoeuvrer le moteur, ledit guidon (B) étant déplaçable en différentes positions, caractérisé par le fait que le châssis porte un siège (C) pour le transport d'un individu et un récipient (E) pour y mettre l'équipement de golf, que à chaque côté du siège (C) est placé un marchepied avant (Ga), tandis que derrière le siège (C) est monté un marchepied arrière (Gp), et que l'arbre de direction (K) est une tige flexible et/ou une tige articulée et/ou une tige télescopique, de sorte que le guidon (B) est déplaçable d'une première position, dans laquelle il se trouve au-dessus du châssis, à une seconde position dans laquelle il est situé derrière le châssis, de sorte que le chariot peut être dirigé par un utilisateur étant assis sur le siège (C), étant debout sur le marchepied arrière (Gp) ou marchant derrière le chariot.
